# EUROPEAN PATENT SPECIFICATION

(11) **EP 3 780 680 B1**
(45) Date of publication and mention of the grant of the patent: **01.06.2022**
(21) Application number: 19827470.6
(22) Date of filing: 22.04.2019
(51) Int. Cl.: H04W 24/02, H04L 12/24

(54) **5G DEPLOYMENT THROUGH A 4G NETWORK**
5G NETZWERKKONFIGURATION DURCH 4G NETZ
DÉPLOIEMENT D'UN RÉSEAU 5G PAR UN RÉSEAU 4G

(30) Priority: 29.06.2018 CN 201810697283
(43) Date of publication of application: 17.02.2021
(73) Proprietor: ZTE Corporation, shenzhen Guangdong 518057 (CN)
(72) Inventor: LI, Yang, Shenzhen, Guangdong 518057 (CN)
(74) Representative: Novagraaf International SA
(86) International application number: PCT/CN2019/083754
(87) International publication number: WO 2020/001142

(56) References cited:
- CN-A- 106 304 055
- CN-A- 106 454 877
- CN-A- 106 899 986
- US-A1- 2008 220 764
- US-A1- 2014 206 336

## Description

### CROSS REFERENCE TO RELATED APPLICATIONS

The present disclosure claims priority to a Chinese patent application No. 201810697283.8, filed June 29, 2018.

### TECHNICAL FIELD

The present disclosure relates but is not limited to the field of mobile communication base station management technology, in particular, to a method and a device for communication device station deployment and a storage medium.

### BACKGROUND

In the mobile communication field, software update of a base station device includes software upgrade and station deployment. The software upgrade refers to update of the base station device to a new service version when the base station device is already running a normal service version. The station deployment refers to an operation of starting a service for the first time for a single board of a newly produced base station.

A base station device only has basic software when it is shipped from a factory, and needs to be planned for and installed with services in a unified manner during construction of wireless network facilities. Generally, it is necessary to realize an initial service opening of the base station through a corresponding station deployment technology, and a remote operation maintenance channel has to be established between the base station and an operation management center (hereinafter "OMC"). In related technologies, a solution for station deployment performed on a fifth generation communication (hereinafter "5G") device usually requires a lot of manpower and material resources while efficiency is low.

Patent application US 20080220764A1 discloses relevant technology regarding determination of a location of a home base station and patent application US 20140206336A1 discloses relevant technology regarding the base station device in obtaining configuration data.

### SUMMARY

In view of the above problem, embodiments of the present disclosure provide a method and a device for communication device station deployment and a storage medium. By using an available base station device, station deployment is performed on a 5G communication device, to reduce manpower cost of station deployment on the 5G communication device.

The invention is set out in the appended set of claims. In the invention, by sufficiently using available base station, there is no longer the need for on-site configuration by a person, thereby reducing cost for manpower in station deployment of the 5G communication device.

### BRIEF DESCRIPTION OF THE DRAWINGS

FIG. 1 is a flowchart of a method for communication device station deployment provided in an embodiment of the present disclosure;
FIG. 2 is a schematic diagram of an installation structure of communication devices in a BBU frame provided in an embodiment of the present disclosure;
FIG. 3 is a schematic diagram of interactions in station deployment of a co-frame base station provided in an embodiment of the present disclosure;
FIG. 4 is a schematic diagram of a structure of a device for communication device station deployment provided in an embodiment of the present disclosure.

### DETAILED DESCRIPTION

The inventors find during their research that station deployment may be realized in the following manner.
(1) Station deployment is performed at a near-end serial interface, a USB interface or a network interface. In this manner, an operator uses, on site, a station deployment tool to access a base station to perform a parameter configuration and a version upgrade, so as to ensure that a service of the base station is normally launched. A defect is that on-site operation is required, which costs both manpower and material resources. A launching efficiency is low and thus remote and batch operation can not be realized.
(2) When the base station is shipped from a factory, initial configuration data related to link establishment is written by default, so that an operation and management channel may be established between the base station and an OMC. Then, operations such as updating configuration data and version are completed remotely through the OMC. A defect is that the operations can not be performed unless a network link works, which highly emphasizes factory-set data of a base station device, and a particular BOOT strapping Protocol (hereinafter "BOOTP") or a dynamic host configuration protocol (hereinafter "DHCP") service need to be deployed and written, thereby increasing system complexity.

In an embodiment of the present disclosure, a station deployment file package corresponding to a second communication network device is acquired from a first OMC corresponding to a first communication network device; a first communication link between the first communication network device and the second communication network device is established; and the station deployment file package is transmitted to the second communication network device, via the first communication link, from the first communication network device, the station deployment file package being configured for the second communication network device to execute station deployment.

In the following, the present disclosure is further described with reference to the drawings and embodiments. It shall be appreciated that the embodiments provided herein are only for explaining rather than making limitation to the present disclosure. In addition, the following embodiments provided are some rather than all embodiments for implementing the present disclosure. In a case where there is no conflict, the technical solutions disclosed in embodiments of the present disclosure may be implemented in any way of combination between the technical solutions.

It shall be noted that in embodiments of the present disclosure, terms such as "include", "including" or any other variants are inclusive rather than exclusive. Therefore, a method or device including a series of elements includes not only these elements clearly stated but other elements not clearly listed, or further includes elements inherent to the method or device. Without more limitations, an element defined by "including a..." does not exclude other related elements in the method or device (for example, a step in a method or a unit in a device; and for example, the unit may be a part of a circuit, processor, program or software).

For example, an information processing method provided in an embodiment of the present disclosure includes a series of steps, but the information processing method provided in the embodiment of the present disclosure is not limited to steps as disclosed. Similarly, a video processing device provided in an embodiment of the present disclosure includes a series of modules, but the device provided in the embodiment of the present disclosure is not limited to the modules clearly disclosed but may further include units that need to be set for acquiring related information or set when performing processing based on the information.

In the following description, terms such as "first/second/third and the like" mean to be distinguished from similar objects rather than being a particular sequence for the objects. It may be appreciated that an order for contents respectively following "first/second/third and the like" may be changed, so that the embodiments described in the present disclosure as shown in the drawings or as described may further be implemented in an order beyond what is shown herein.

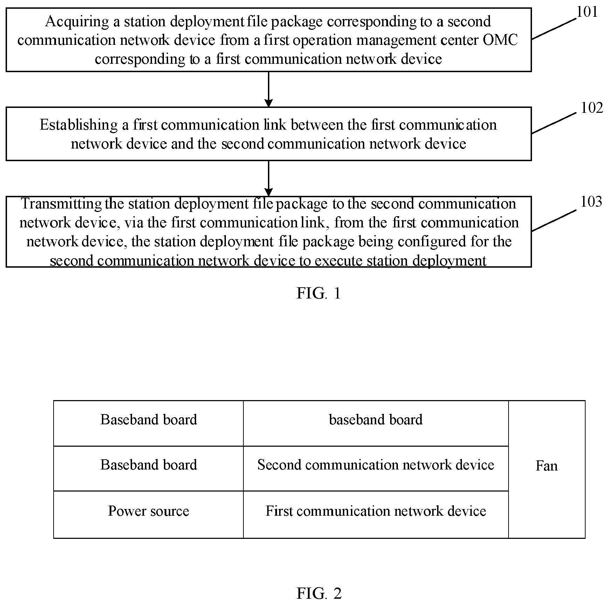

FIG. 1 is a flowchart of a method for communication device station deployment provided in an embodiment of the present disclosure. As shown in FIG. 1, the method for communication device station deployment provided in the embodiment of the present disclosure includes:

Step 101: acquiring a station deployment file package corresponding to a second communication network device from a first OMC corresponding to a first communication network device.

Herein, the first communication network device is a 4G communication device working in a normal state in a base station, for example, a 4G base station main control board or a 4G baseband board. The second communication network device is a 5G communication device on which station deployment is to be performed, for example, a 5G base station main control board or a 5G baseband board.

The station deployment file package is deployed on the first OMC and transmitted to the first communication network device by the first OMC.

The station deployment file package may include a minimum set file, a file list file and the like of service opening software of the second communication network device (namely, the 5G communication device), and may include a file, a file list file and the like when the 5G communication device works normally. Herein, the minimum set file may be a minimum software set of the 5G communication service. Information in the file list file may include: a total number and corresponding file information of files obtained when minimum set software is decompressed, file transfer protocol (hereinafter "FTP") connection information of a 5G main control board, directory structure information of the 5G main control board, and the like.

The station deployment file package may further include basic configuration data needed for service by the second communication network device (namely, the 5G communication device). The basic configuration data is mainly configured to establish a communication link between the second communication network device and an OMC. The configuration data may be configured and exported through the OMC of the 5G communication device. The basic configuration data may further include a corresponding base station number, a base station IP data related to link-establishing, a data version number, UME IP data, gateway information and so on.

The station deployment file package may be in a 4G OMC or 5G OMC. The station deployment file package is configured in real time according to such condition as a base station the 5G communication device locates and does not require on-site configuration by a person.

In some embodiments, the first communication network device and the second communication network device may be single-board devices within a same BBU frame.

When the first communication network device and the second communication network device are single-board devices within the same BBU frame, devices in the BBU frame may be arranged as shown in FIG. 2. The devices in the BBU frame are plugged to a substrate of the BBU frame as single boards, and the devices are electrically connected through the substrate.

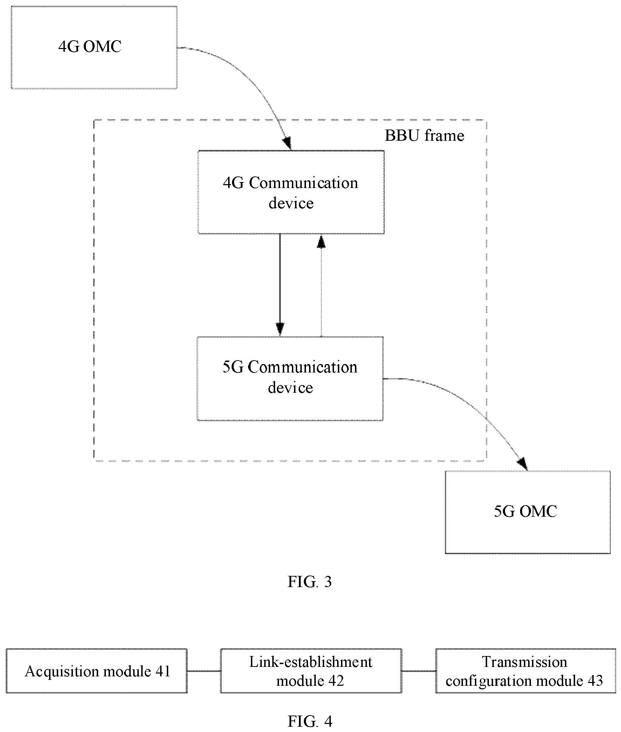

In practice, a schematic diagram of interactions in station deployment of a 4G-5G co-frame base station is shown as FIG. 3. A file package download task of station deployment of the 5G communication device may be issued by the 4G OMC, and task information may be forwarded to a foreground of the 4G communication device of the base station. Generally, due to innovation of a 5G network architecture, the 4G communication device and the 5G communication device are managed by different OMCs, so the task may further be actively triggered by a 5G network controller and forwarded through network to a 4G network controller to implement the particular task.

The 4G communication device may download the station deployment file package from the 4G OMC through FTP. The foreground of the 4G communication device acquires particular download information such as an FTP address and a download list of the download task, and performs legitimation check on the download task of the station deployment. Herein, the legitimation check may include completeness check of a station deployment software (file) and legitimation check of the download task. If a check of the 4G communication device foreground fails, the failure message is immediately returned to the 4G OMC background and is presented on a user operation interface. If the check passes, the 4G communication device foreground replies a message of starting download operation to the 4G OMC background, and reports progress information to be notified on the user operation interface. The 4G communication device foreground downloads the station deployment file package from a 4G OMC server according to the download list and corresponding FTP information, and stores the station deployment file package in the 4G communication device, for example, in a FLASH of the main control board of the 4G base station.

In order to save bandwidth resources, minimum set software of the station deployment may be a compressed file. When download of all software is completed, whether there is a 5G minimum set file and a file list file in the FLASH of the main control board of the 4G base station is checked. If any files does not exist, a failure message is returned to the 4G OMC background and then displayed on the user operation interface. If both files exist, the 4G communication device foreground starts to decompress the 5G minimum set file.

The 4G communication device foreground reads the file list file and checks completeness of the decompressed file according to the information in the list file. If the check fails, the failure is immediately returned to the 4G OMC background and displayed on the user operation interface.

Step 102: establishing a first communication link between the first communication network device and the second communication network device.

Herein, the first communication link is a device underlying link like Ethernet. The first communication network device and the second communication network device may establish a connection between devices through the substrate of the BBU frame. Generally, an Ethernet link between devices in the BBU frame may be directly established through the substrate of the BBU frame. Connection between devices in the BBU frame further includes connection of control signals between the devices provided on the substrate. The first communication network device and the second communication network device may also be connected through an external cable like the Ethernet between single boards. The first communication link between the first communication network device and the second communication network device is established through an Ethernet protocol. The first communication network device and the second communication network device may also be located in different BBU frames in the same base station. The first communication network device and the second communication network device are connected through an Ethernet line to further form the first communication link.

The first communication link is configured and established according to configuration information of the first communication link in the station deployment file package.

The configuration information of the first communication link may be such network address as a physical address of the first communication network device and second communication network device on the BBU frame. The first communication network device establishes a connection with the second communication network device according to the network address.

In practice, after the 4G communication device receives the station deployment file package, the 4G communication device may establish connection with a 5G single board according to the configuration information, such as internal link information, of the first communication link of the 5G communication device single board in the list file. The internal link information may be an Ethernet FTP link or another device underlying link.

Step 103: transmitting the station deployment file package to the second communication network device via the first communication link, from the first communication network device, the station deployment file package being configured for the second communication network device to execute station deployment.

Herein, the station deployment file package may be transmitted, by the first communication network device, to a preset storage position of the second communication network device, via the first communication link. The preset storage position may be a preset memory address or a file structure and the like. Upon station deployment of the second communication network device, the station deployment file package needs to be executed from a designated position, for example, starting configuration is executed at the designated position or a designated directory structure. Therefore, the preset storage position may be arranged according to a station deployment requirement of the second communication network device. The station deployment file package may be transmitted by using an FTP protocol.

In practice, the 4G communication device, one by one, checks whether the directory structure of the 5G communication device single board is complete according to directory structure information in the list file. For a non-existent directory, a FLASH directory is actively created in the 5G communication device through an FTP command. The 4G communication device, one by one, uploads decompressed station deployment minimum set files in a local FLASH through the FTP to a directory corresponding to the 5G main control board according to the file information in the list file. If there is a failure during the process, the upload operation is stopped immediately, the failure message is immediately returned to the 4G OMC background and displayed on the user operation interface. After the 4G communication device successfully uploads all files to the 5G communication device single board, the FTP connection is released.

The 4G communication device may use a command or a control line of the BBU frame to reset the 5G communication device single board, and a station deployment task completion message is replied to the 4G OMC background and displayed on the user operation interface. The 5G communication device executes the station deployment file package to complete the station deployment.

In some embodiments, the station deployment file package further includes: configuration information of a second link; the configuration information of the second link being read by the second communication network device when the second communication network device executes the station deployment and being configured for the second communication network device to configure a communication link between the second communication network device and a second OMC corresponding to the second communication network device.

Herein, the 5G communication device configures the second communication link with the 5G OMC and establishes a connection with the 5G OMC according to the basic configuration data contained in the station deployment file package and needed by the 5G communication device service. If the station deployment file package is the minimum set file of opening software of the 5G communication device service, such remote operations as baseline version upgrade, service parameter configuration, performance test and network optimization may be performed after a link is established between the 5G communication device single board and an operation maintenance channel of the 5G OMC. If the station deployment file package is normal opening software of the 5G communication device service, remote operations such as software upgrade may be performed.

The method provided in the embodiment of the present disclosure is applicable in 5G networking initial stage. Herein, no service software needs to be preinstalled in a 5G communication device to be shipped. That is, upon shipment, no customized basic service software may be written, but a drive or an underlying operating system may be included. In this way, a remote station deployment and configuration may be realized. In practice, because the same OMC may control a plurality of communication devices, control over a plurality of 4G communication devices and station deployment of a plurality of 5G communication devices may be realized, thereby achieving the objective of remote batch station deployment. In this way, original commercialized network devices may be effectively utilized to complete the station deployment in a single batch, configuration and preinstalled services written upon shipment are not needed, thereby reducing a risk to safety.

FIG. 4 is a schematic diagram of a structure of a device for communication device station deployment provided in an embodiment of the present disclosure. As shown in FIG. 4, the device for communication device station deployment provided in the embodiment of the present disclosure includes: an acquisition module 41, a link-establishment module 42 and a transmission configuration module 43.

Herein, the acquisition module 41 is configured to acquire a station deployment file package corresponding to a second communication network device from a first OMC corresponding to a first communication network device.

Herein, the first communication network device is a 4G communication device working in a normal state in a base station, for example, a 4G base station main control board or a 4G baseband board. The second communication network device is a 5G communication device on which station deployment is to be performed, for example, a 5G base station main control board or a 5G baseband board.

The station deployment file package may be deployed on the first OMC and transmitted to the first communication network device by the first OMC.

The station deployment file package may include a minimum set file, a file list file and the like of service opening software of the second communication network device (namely, the 5G communication device), and may include a file, a file list file and the like when the 5G communication device works normally. Herein, the minimum set file may be a minimum software set of the 5G communication service. Information in the file list file may include: a total number and corresponding file information of files obtained when minimum set software is decompressed, FTP connection information of a 5G main control board, directory structure information of the 5G main control board, and the like.

The station deployment file package may further include basic configuration data needed for service by the second communication network device (namely, the 5G communication device). The basic configuration data is mainly configured to establish a communication link between the second communication network device and an OMC. The configuration data may be configured and exported through the OMC of the 5G communication device. The basic configuration data may further include a corresponding base station number, a base station IP data related to link-establishing, a data version number, UME IP data, gateway information and so on.

The station deployment file package may be in a 4G OMC or 5G OMC. The station deployment file package is configured in real time according to such condition as a base station the 5G communication device locates and does not require on-site configuration by a person. In some embodiments, the first communication network device and the second communication network device may be single-board devices within a same BBU frame.

When the first communication network device and the second communication network device are single-board devices within the same BBU frame, devices in the BBU frame may be arranged as shown in FIG. 2. The devices in the BBU frame are plugged to a substrate of the BBU frame as single boards, and the devices are electrically connected through the substrate.

In practice, a schematic diagram of interactions in station deployment of a 4G-5G co-frame base station is shown as FIG. 3. A file package download task of station deployment of the 5G communication device may be issued by the 4G OMC, and task information may be forwarded to a foreground of the 4G communication device of the base station. Generally, due to innovation of a 5G network architecture, the 4G communication device and the 5G communication device are managed by different OMCs, so the task may further be actively triggered by a 5G network controller and forwarded through network to a 4G network controller to implement the particular task.

The 4G communication device may download the station deployment file package from the 4G OMC through FTP. The foreground of the 4G communication device acquires particular download information such as an FTP address and a download list of the download task, and performs legitimation check on the download task of the station deployment. Herein, the legitimation check may include completeness check of a station deployment software (file) and legitimation check of the download task. If a check of the 4G communication device foreground fails, the failure message is immediately returned to the 4G OMC background and is presented on a user operation interface. If the check passes, the 4G communication device foreground replies a message of starting download operation to the 4G OMC background, and reports progress information to be notified on the user operation interface. The 4G communication device foreground downloads the station deployment file package from a 4G OMC server according to the download list and corresponding FTP information, and stores the station deployment file package in the 4G communication device, for example, in a FLASH of the main control board of the 4G base station.

In order to save bandwidth resources, minimum set software of the station deployment may be a compressed file. When download of all software is completed, whether there is a 5G minimum set file and a file list file in the FLASH of the main control board of the 4G base station is checked. If any files does not exist, a failure message is returned to the 4G OMC background and then displayed on the user operation interface. If both files exist, the 4G communication device foreground starts to decompress the 5G minimum set file.

The 4G communication device foreground reads the file list file and checks completeness of the decompressed file according to the information in the list file. If the check fails, the failure is immediately returned to the 4G OMC background and displayed on the user operation interface.

The link-establishment module 42 is configured to establish a first communication link between the first communication network device and the second communication network device.

Herein, the first communication link is a device underlying Ethernet link The first communication network device and the second communication network device may establish a connection between devices through the substrate of the BBU frame. Generally, an Ethernet link may be directly established through the substrate of the BBU frame. Connection between devices in the BBU frame further includes connection of control signals between the devices provided on the substrate. The first communication network device and the second communication network device may also be connected through an external cable like the Ethernet between single boards. The first communication link between the first communication network device and the second communication network device may be established through an Ethernet protocol. The first communication network device and the second communication network device may also be located in different BBU frames in the same base station. The first communication network device and the second communication network device may be connected through an Ethernet line to further form the first communication link.

The first communication link is configured and established according to configuration information of the first communication link in the station deployment file package.

The configuration information of the first communication link may be such network address as a physical address of the first communication network device and second communication network device on the BBU frame. The first communication network device establishes a connection with the second communication network device according to the network address.

In practice, after the 4G communication device receives the station deployment file package, the 4G communication device may establish connection with a 5G single board according to the configuration information, such as internal link information, of the first communication link of the 5G communication device single board in the list file. The internal link information may be an Ethernet FTP link or another device underlying link.

The transmission configuration module 43 is configured to transmit the station deployment file package to the second communication network device via the first communication link, from the first communication network device, the station deployment file package being configured for the second communication network device to execute station deployment.

Herein, the station deployment file package may be transmitted, by the first communication network device, to a preset storage position of the second communication network device, via the first communication link. The preset storage position may be a preset memory address or a file structure and the like. Upon station deployment of the second communication network device, the station deployment file package needs to be executed from a designated position, for example, starting configuration is executed at the designated position or a designated directory structure. Therefore, the preset storage position may be arranged according to a station deployment requirement of the second communication network device. The station deployment file package may be transmitted by using an FTP protocol.

In practice, the 4G communication device, one by one, checks whether the directory structure of the 5G communication device single board is complete according to directory structure information in the list file. For a non-existent directory, a FLASH directory is actively created in the 5G communication device through an FTP command. The 4G communication device, one by one, uploads decompressed station deployment minimum set files in a local FLASH through the FTP to a directory corresponding to the 5G main control board according to the file information in the list file. If there is a failure during the process, the upload operation is stopped immediately, the failure message is immediately returned to the 4G OMC background and displayed on the user operation interface. After the 4G communication device successfully uploads all files to the 5G communication device single board, the FTP connection is released.

The 4G communication device may use a command or a control line of the BBU frame to reset the 5G communication device single board, and a station deployment task completion message is replied to the 4G OMC background and displayed on the user operation interface. The 5G communication device executes the station deployment file package to complete the station deployment.

In some embodiments, the station deployment file package further includes: configuration information of a second link; the configuration information of the second link being read by the second communication network device when the second communication network device executes the station deployment and being configured for the second communication network device to configure a communication link between the second communication network device and a second OMC corresponding to the second communication network device.

Herein, the 5G communication device configures the second communication link with the 5G OMC and establishes a connection with the 5G OMC according to the basic configuration data contained in the station deployment file package and needed by the 5G communication device service. If the station deployment file package is the minimum set file of opening software of the 5G communication device service, such remote operations as baseline version upgrade, service parameter configuration, performance test and network optimization may be performed after a link is established between the 5G communication device single board and an operation maintenance channel of the 5G OMC. If the station deployment file package is normal opening software of the 5G communication device service, remote operations such as software upgrade may be performed.

The method provided in the embodiment of the present disclosure is applicable in 5G networking initial stage. Herein, no service software needs to be preinstalled in a 5G communication device to be shipped. That is, upon shipment, no customized basic service software may be written, but a drive or an underlying operating system may be included. In this way, a remote station deployment and configuration may be realized.

In practice, because the same OMC may control a plurality of communication devices, control over a plurality of 4G communication devices and station deployment of a plurality of 5G communication devices may be realized, thereby achieving the objective of remote batch station deployment. In this way, original commercialized network devices may be effectively utilized to complete the station deployment in a single batch, configuration and preinstalled services written upon shipment are not needed, thereby reducing a risk to safety.

In practice, the acquisition module 41, the link-establishment module 42 and the transmission configuration module 43 all may be implemented by a central processing unit (CPU), a microcontroller unit (MCU), a digital signal processor (DSP), a field programmable gate array (FPGA) in a base station communication device or OMC device.

A storage medium provided in an embodiment of the present disclosure stores an executable program. Herein, the executable program, when executed by a processor, implements the method for communication device station deployment. As shown in FIG. 1, the method includes:

Step 101: acquiring a station deployment file package corresponding to a second communication network device from a first OMC corresponding to a first communication network device.

Herein, the first communication network device is a 4G communication device working in a normal state in a base station, for example, a 4G base station main control board or a 4G baseband board. The second communication network device is a 5G communication device on which station deployment is to be performed, for example, a 5G base station main control board or a 5G baseband board.

The station deployment file package may be deployed on the first OMC and transmitted to the first communication network device by the first OMC.

The station deployment file package may include a minimum set file, a file list file and the like of service opening software of the second communication network device (namely, the 5G communication device), and may include a file, a file list file and the like when the 5G communication device works normally. Herein, the minimum set file may be a minimum software set of the 5G communication service. Information in the file list file may include: a total number and corresponding file information of files obtained when minimum set software is decompressed, FTP connection information of a 5G main control board, directory structure information of the 5G main control board, and the like.

The station deployment file package may further include basic configuration data needed for service by the second communication network device (namely, the 5G communication device). The basic configuration data is mainly configured to establish a communication link between the second communication network device and an OMC. The configuration data may be configured and exported through the OMC of the 5G communication device. The basic configuration data may further include a corresponding base station number, a base station IP data related to link-establishing, a data version number, UME IP data, gateway information and so on.

The station deployment file package may be in a 4G OMC or 5G OMC. The station deployment file package is configured in real time according to such condition as a base station the 5G communication device locates and does not require on-site configuration by a person. In some embodiments, the first communication network device and the second communication network device may be single-board devices within a same BBU frame.

When the first communication network device and the second communication network device are single-board devices within the same BBU frame, devices in the BBU frame may be arranged as shown in FIG. 2 The devices in the BBU frame are plugged to a substrate of the BBU frame as single boards, and the devices are electrically connected through the substrate.

In practice, a schematic diagram of interactions in station deployment of a 4G-5G co-frame base station is shown as FIG. 3. A file package download task of station deployment of the 5G communication device may be issued by the 4G OMC, and task information may be forwarded to a foreground of the 4G communication device of the base station. Generally, due to innovation of a 5G network architecture, the 4G communication device and the 5G communication device are managed by different OMCs, so the task may further be actively triggered by a 5G network controller and forwarded through network to a 4G network controller to implement the particular task.

The 4G communication device may download the station deployment file package from the 4G OMC through FTP. The foreground of the 4G communication device acquires particular download information such as an FTP address and a download list of the download task, and performs legitimation check on the download task of the station deployment. Herein, the legitimation check may include completeness check of a station deployment software (file) and legitimation check of the download task. If a check of the 4G communication device foreground fails, the failure message is immediately returned to the 4G OMC background and is presented on a user operation interface. If the check passes, the 4G communication device foreground replies a message of starting download operation to the 4G OMC background, and reports progress information to be notified on the user operation interface. The 4G communication device foreground downloads the station deployment file package from a 4G OMC server according to the download list and corresponding FTP information, and stores the station deployment file package in the 4G communication device, for example, in a FLASH of the main control board of the 4G base station.

In order to save bandwidth resources, minimum set software of the station deployment may be a compressed file. When download of all software is completed, whether there is a 5G minimum set file and a file list file in the FLASH of the main control board of the 4G base station is checked. If any files does not exist, a failure message is returned to the 4G OMC background and then displayed on the user operation interface. If both files exist, the 4G communication device foreground starts to decompress the 5G minimum set file.

The 4G communication device foreground reads the file list file and checks completeness of the decompressed file according to the information in the list file. If the check fails, the failure is immediately returned to the 4G OMC background and displayed on the user operation interface.

Step 102: establishing a first communication link between the first communication network device and the second communication network device.

Herein, the first communication link is a device underlying Ethernet link The first communication network device and the second communication network device may establish a connection between devices through the substrate of the BBU frame. Generally, an Ethernet link or a device underlying link between devices in the BBU frame may be directly established through the substrate of the BBU frame. Connection between devices in the BBU frame further includes connection of control signals between the devices provided on the substrate. The first communication network device and the second communication network device may also be connected through an external cable like the Ethernet between single boards. The first communication link between the first communication network device and the second communication network device may be established through an Ethernet protocol. The first communication network device and the second communication network device may also be located in different BBU frames in the same base station. The first communication network device and the second communication network device may be connected through an Ethernet line to further form the first communication link.

In some embodiments, the first communication link is configured and established according to configuration information of the first communication link in the station deployment file package.

The configuration information of the first communication link may be such network address as a physical address of the first communication network device and second communication network device on the BBU frame. The first communication network device establishes a connection with the second communication network device according to the network address.

In practice, after the 4G communication device receives the station deployment file package, the 4G communication device may establish connection with a 5G single board according to the configuration information, such as internal link information, of the first communication link of the 5G communication device single board in the list file. The internal link information may be an Ethernet FTP link or another device underlying link.

Step 103: transmitting the station deployment file package to the second communication network device via the first communication link, from the first communication network device, the station deployment file package being configured for the second communication network device to execute station deployment.

Herein, the station deployment file package may be transmitted, by the first communication network device, to a preset storage position of the second communication network device via the first communication link. The preset storage position may be a preset memory address or a file structure and the like. Upon station deployment of the second communication network device, the station deployment file package needs to be executed from a designated position, for example, starting configuration is executed at the designated position or a designated directory structure. Therefore, the preset storage position may be arranged according to a station deployment requirement of the second communication network device. The station deployment file package may be transmitted by using an FTP protocol.

In practice, the 4G communication device, one by one, checks whether the directory structure of the 5G communication device single board is complete according to directory structure information in the list file. For a non-existent directory, a FLASH directory is actively created in the 5G communication device through an FTP command. The 4G communication device, one by one, uploads decompressed station deployment minimum set files in a local FLASH through the FTP to a directory corresponding to the 5G main control board according to the file information in the list file. If there is a failure during the process, the upload operation is stopped immediately, the failure message is immediately returned to the 4G OMC background and displayed on the user operation interface. After the 4G communication device successfully uploads all files to the 5G communication device single plate, the FTP connection is released.

The 4G communication device may use a command or a control line of the BBU frame to reset the 5G communication device single board, and a station deployment task completion message is replied to the 4G OMC background and displayed on the user operation interface. The 5G communication device executes the station deployment file package to complete the station deployment.

In some embodiments, the station deployment file package further includes: configuration information of a second link; the configuration information of the second link being read by the second communication network device when the second communication network device executes the station deployment and being configured for the second communication network device to configure a communication link between the second communication network device and a second OMC corresponding to the second communication network device.

Herein, the 5G communication device configures the second communication link with the 5G OMC and establishes a connection with the 5G OMC according to the basic configuration data contained in the station deployment file package and needed by the 5G communication device service. If the station deployment file package is the minimum set file of opening software of the 5G communication device service, such remote operations as baseline version upgrade, service parameter configuration, performance test and network optimization may be performed after a link is established between the 5G communication device single board and an operation maintenance channel of the 5G OMC. If the station deployment file package is normal opening software of the 5G communication device service, remote operations such as software upgrade may be performed.

The method provided in the embodiment of the present disclosure is applicable in 5G networking initial stage. Herein, no service software needs to be preinstalled in a 5G communication device to be shipped. That is, upon shipment, no customized basic service software may be written, but a drive or an underlying operating system may be included. In this way, a remote station deployment and configuration may be realized.

In practice, because the same OMC may control a plurality of communication devices, control over a plurality of 4G communication devices and station deployment of a plurality of 5G communication devices may be realized, thereby achieving the objective of remote batch station deployment. In this way, original commercialized network devices may be effectively utilized to complete the station deployment in a single batch, configuration and preinstalled services written upon shipment are not needed, thereby reducing a risk to safety.

The device for communication device station deployment provided in an embodiment of the present disclosure includes a processor, a memory, and an executable program stored in the memory and run by the processor. The processor implements the method for communication device station deployment when the processor runs the executable program. As shown in FIG. 1, the method includes:

Step 101: acquiring a station deployment file package corresponding to a second communication network device from a first OMC corresponding to a first communication network device.

Herein, the first communication network device is a 4G communication device working in a normal state in a base station, for example, a 4G base station main control board or a 4G baseband board. The second communication network device is a 5G communication device on which station deployment is to be performed, for example, a 5G base station main control board or a 5G baseband board.

The station deployment file package may be deployed on the first OMC and transmitted to the first communication network device by the first OMC.

The station deployment file package may include a minimum set file, a file list file and the like of service opening software of the second communication network device (namely, the 5G communication device), and may include a file, a file list file and the like when the 5G communication device works normally. Herein, the minimum set file may be a minimum software set of the 5G communication service. Information in the file list file may include: a total number and corresponding file information of files obtained when minimum set software is decompressed, FTP connection information of a 5G main control board, directory structure information of the 5G main control board, and the like.

The station deployment file package may further include basic configuration data needed for service by the second communication network device (namely, the 5G communication device). The basic configuration data is mainly configured to establish a communication link between the second communication network device and an OMC. The configuration data may be configured and exported through the OMC of the 5G communication device. The basic configuration data may further include a corresponding base station number, a base station IP data related to link-establishing, a data version number, UME IP data, gateway information and so on.

The station deployment file package may be in a 4G OMC or 5G OMC. The station deployment file package is configured in real time according to such condition as a base station the 5G communication device locates and does not require on-site configuration by a person.

In some embodiments, the first communication network device and the second communication network device may be single-board devices within a same BBU frame.

When the first communication network device and the second communication network device are single-board devices within the same BBU frame, devices in the BBU frame may be arranged as shown in FIG. 2. The devices in the BBU frame are plugged to a substrate of the BBU frame as single boards, and the devices are electrically connected through the substrate.

In practice, a schematic diagram of interactions in station deployment of a 4G-5G co-frame base station is shown as FIG. 3. A file package download task of station deployment of the 5G communication device may be issued by the 4G OMC, and task information may be forwarded to a foreground of the 4G communication device of the base station. Generally, due to innovation of a 5G network architecture, the 4G communication device and the 5G communication device are managed by different OMCs, so the task may further be actively triggered by a 5G network controller and forwarded through network to a 4G network controller to implement the particular task.

The 4G communication device may download the station deployment file package from the 4G OMC through FTP. The foreground of the 4G communication device acquires particular download information such as an FTP address and a download list of the download task, and performs legitimation check on the download task of the station deployment. Herein, the legitimation check may include completeness check of a station deployment software (file) and legitimation check of the download task. If a check of the 4G communication device foreground fails, the failure message is immediately returned to the 4G OMC background and is presented on a user operation interface. If the check passes, the 4G communication device foreground replies a message of starting download operation to the 4G OMC background, and reports progress information to be notified on the user operation interface. The 4G communication device foreground downloads the station deployment file package from a 4G OMC server according to the download list and corresponding FTP information, and stores the station deployment file package in the 4G communication device, for example, in a FLASH of the main control board of the 4G base station.

In order to save bandwidth resources, minimum set software of the station deployment may be a compressed file. When download of all software is completed, whether there is a 5G minimum set file and a file list file in the FLASH of the main control board of the 4G base station is checked. If any files does not exist, a failure message is returned to the 4G OMC background and then displayed on the user operation interface. If both files exist, the 4G communication device foreground starts to decompress the 5G minimum set file.

The 4G communication device foreground reads the file list file and checks completeness of the decompressed file according to the information in the list file. If the check fails, the failure is immediately returned to the 4G OMC background and displayed on the user operation interface.

Step 102: establishing a first communication link between the first communication network device and the second communication network device.

Herein, the first communication link is a device underlying Ethernet link The first communication network device and the second communication network device may establish a connection between devices through the substrate of the BBU frame. Generally, an Ethernet link or a device underlying link between devices in the BBU frame may be directly established through the substrate of the BBU frame. Connection between devices in the BBU frame further includes connection of control signals between the devices provided on the substrate. The first communication network device and the second communication network device may also be connected through an external cable like the Ethernet between single boards. The first communication link between the first communication network device and the second communication network device may be established through an Ethernet protocol. The first communication network device and the second communication network device may also be located in different BBU frames in the same base station. The first communication network device and the second communication network device may be connected through an Ethernet line to further form the first communication link.

The first communication link is configured and established according to configuration information of the first communication link in the station deployment file package.

The configuration information of the first communication link may be such network address as a physical address of the first communication network device and second communication network device on the BBU frame. The first communication network device establishes a connection with the second communication network device according to the network address.

In practice, after the 4G communication device receives the station deployment file package, the 4G communication device may establish connection with a 5G single board according to the configuration information, such as internal link information of the first communication link of the 5G communication device single board in the list file. The internal link information may be an Ethernet FTP link or another device underlying link.

Step 103: transmitting the station deployment file package to the second communication network device, via the first communication link, from the first communication network device, the station deployment file package being configured for the second communication network device to execute station deployment.

Herein, the station deployment file package may be transmitted, by the first communication network device, to a preset storage position of the second communication network device, via the first communication link. The preset storage position may be a preset memory address or a file structure and the like. Upon station deployment of the second communication network device, the station deployment file package needs to be executed from a designated position, for example, starting configuration is executed at the designated position or a designated directory structure. Therefore, the preset storage position may be arranged according to a station deployment requirement of the second communication network device. The station deployment file package may be transmitted by using an FTP protocol.

In practice, the 4G communication device, one by one, checks whether the directory structure of the 5G communication device single board is complete according to directory structure information in the list file. For a non-existent directory, a FLASH directory is actively created in the 5G communication device through an FTP command. The 4G communication device, one by one, uploads decompressed station deployment minimum set files in a local FLASH through the FTP to a directory corresponding to the 5G main control board according to the file information in the list file. If there is a failure during the process, the upload operation is stopped immediately, the failure message is immediately returned to the 4G OMC background and displayed on the user operation interface. After the 4G communication device successfully uploads all files to the 5G communication device single board, the FTP connection is released.

The 4G communication device may use a command or a control line of the BBU frame to reset the 5G communication device single board, and a station deployment task completion message is replied to the 4G OMC background and displayed on the user operation interface. The 5G communication device executes the station deployment file package to complete the station deployment.

In some embodiments, the station deployment file package further includes: configuration information of a second link; the configuration information of the second link being read by the second communication network device when the second communication network device executes the station deployment and being configured for the second communication network device to configure a communication link between the second communication network device and a second OMC corresponding to the second communication network device.

Herein, the 5G communication device configures the second communication link with the 5G OMC and establishes a connection with the 5G OMC according to the basic configuration data contained in the station deployment file package and needed by the 5G communication device service. If the station deployment file package is the minimum set file of opening software of the 5G communication device service, such remote operations as baseline version upgrade, service parameter configuration, performance test and network optimization may be performed after a link is established between the 5G communication device single board and an operation maintenance channel of the 5G OMC. If the station deployment file package is normal opening software of the 5G communication device service, remote operations such as software upgrade may be performed.

The method provided in the embodiment of the present disclosure is applicable in 5G networking initial stage. Herein, no service software needs to be preinstalled in a 5G communication device to be shipped. That is, upon shipment, no customized basic service software may be written, but a drive or an underlying operating system may be included. In this way, a remote station deployment and configuration may be realized.

In practice, because the same OMC may control a plurality of communication devices, control over a plurality of 4G communication devices and station deployment of a plurality of 5G communication devices may be realized, thereby achieving the objective of remote batch station deployment. In this way, original commercialized network devices may be effectively utilized to complete the station deployment in a single batch, configuration and preinstalled services written upon shipment are not needed, thereby reducing a risk to.

The above are only the preferable embodiments of the present disclosure and are not intended to make limitation to the scope of protection of the present disclosure that is defined by the claims.

## Claims

1. A method for communication device station deployment, comprising:
acquiring (101), by a first communication network device, a station deployment file package corresponding to a second communication network device from a first operation management center, OMC, that corresponds to the first communication network device;
establishing (102) a first communication link between the first communication network device and the second communication network device; and
transmitting (103) the station deployment file package to the second communication network device, via the first communication link, from the first communication network device, the station deployment file package being configured for the second communication network device to execute station deployment;
wherein the first communication network device is a fourth generation, 4G, communication device, the second communication network device is a fifth generation, 5G, communication device, and the first communication link is an Ethernet link within a base station;
wherein establishing the first communication link between the first communication network device and the second communication network device comprises:
configuring and establishing the first communication link according to configuration information of the first communication link in the station deployment file package.

2. The method according to claim 1, wherein,
the station deployment file package further comprises: configuration information of a second link; the configuration information of the second link being read by the second communication network device when the second communication network device executes the station deployment and being configured for the second communication network device to configure a communication link between the second communication network device and a second OMC corresponding to the second communication network device; wherein the second OMC is a 5G OMC.

3. The method according to claim 1 or 2, wherein,
the first communication network device and the second communication network device are within the same building baseband unit, BBU, frame.

4. A device for communication device station deployment, comprising a processor, a memory, and an executable program stored in the memory and run by the processor, wherein, the processor implements steps of the method for communication device station deployment according to any one of claims 1 to 3 when the processor runs the executable program.

5. A storage medium, storing an executable program, wherein the executable program, when executed by a processor, implements the steps of the method for communication device station deployment according to any one of claims 1 to 3.

## Patentansprüche

1. Verfahren zum Rollout einer Kommunikationsvorrichtungsstation, das Folgendes umfasst:
Erfassen (101) eines Stationsrolloutdateipakets, das einer zweiten Kommunikationsnetzwerkvorrichtung entspricht, durch eine erste Kommunikationsnetzwerkvorrichtung von einem ersten Betriebsverwaltungszentrum, OMC, das der ersten Kommunikationsnetzwerkvorrichtung entspricht;
Aufbauen (102) einer ersten Kommunikationsverbindung zwischen der ersten Kommunikationsnetzwerkvorrichtung und der zweiten Kommunikationsnetzwerkvorrichtung; und
Übertragen (103) des Stationsrolloutdateipakets von der ersten Kommunikationsnetzwerkvorrichtung via die erste Kommunikationsverbindung zur zweiten Kommunikationsnetzwerkvorrichtung, wobei das Stationsrolloutdateipaket zum Ausführen eines Stationsrollouts durch die zweite Kommunikationsnetzwerkvorrichtung ausgelegt ist;
wobei die erste Kommunikationsnetzwerkvorrichtung eine Kommunikationsvorrichtung der vierten Generation, 4G, ist, die zweite Kommunikationsnetzwerkvorrichtung eine Kommunikationsvorrichtung der fünften Generation, 5G, ist und die erste Kommunikationsverbindung eine Ethernetverbindung in einer Basisstation ist;
wobei das Aufbauen der ersten Kommunikationsverbindung zwischen der ersten Kommunikationsnetzwerkvorrichtung und der zweiten Kommunikationsnetzwerkvorrichtung Folgendes umfasst:
Auslegen und Aufbauen der ersten Kommunikationsverbindung gemäß Auslegungsinformationen der ersten Kommunikationsverbindung im Stationsrolloutdateipaket.

2. Verfahren nach Anspruch 1, wobei
das Stationsrolloutdateipaket ferner Folgendes umfasst: Auslegungsinformationen einer zweiten Verbindung; wobei die Auslegungsinformationen der zweiten Verbindung von der zweiten Kommunikationsnetzwerkvorrichtung gelesen werden, wenn die zweite Kommunikationsnetzwerkvorrichtung das Stationsrollout ausführt und zum Auslegen einer Kommunikationsverbindung zwischen der zweiten Kommunikationsnetzwerkvorrichtung und einem zweiten OMC, das der zweiten Kommunikationsnetzwerkvorrichtung entspricht, durch die zweite Kommunikationsnetzwerk Verbindung ausgelegt ist, wobei das zweite OMC ein 5G-OMC ist.

3. Verfahren nach Anspruch 1 oder 2, wobei
die erste Kommunikationsnetzwerkvorrichtung und die zweite Kommunikationsnetzwerkvorrichtung sich im selben Gebäudebasisbandeinheits(BBU)-Frame befinden.

4. Vorrichtung für einen Rollout einer Kommunikationsvorrichtungsstation, die einen Prozessor, einen Speicher und ein ausführbares Programm, das im Speicher gespeichert ist und vom Prozessor umgesetzt wird, umfasst, wobei der Prozessor Schritte des Verfahrens für das Rollout einer Kommunikationsvorrichtungsstation nach einem der Ansprüche 1 bis 3 implementiert, wenn der Prozessor das ausführbare Programm umsetzt.

5. Speichermedium, auf dem ein ausführbares Programm gespeichert ist, wobei das ausführbare Programm, wenn es von einem Prozessor ausgeführt wird, die Schritte des Verfahrens für einen Rollout einer Kommunikationsvorrichtungsstation nach einem der Ansprüche 1 bis 3 implementiert.

## Revendications

1. Procédé de déploiement de station de dispositif de communication, comprenant les étapes consistant à :
acquérir (101), par un premier dispositif de réseau de communication, un paquet de fichiers de déploiement de station correspondant à un deuxième dispositif de réseau de communication, à partir d'un premier centre de gestion des opérations, OMC, qui correspond au premier dispositif de réseau de communication ;
établir (102) une première liaison de communication entre le premier dispositif de réseau de communication et le deuxième dispositif de réseau de communication ; et
transmettre (103) le paquet de fichiers de déploiement de station au deuxième dispositif de réseau de communication, via la première liaison de communication, à partir du premier dispositif de réseau de communication, le paquet de fichiers de déploiement de station étant configuré pour que le deuxième dispositif de réseau de communication exécute un déploiement de station ;
dans lequel le premier dispositif de réseau de communication est un dispositif de communication de quatrième génération, 4G, le deuxième dispositif de réseau de communication est un dispositif de communication de cinquième génération, 5G, et la première liaison de communication est une liaison Ethernet dans une station de base ;
dans lequel l'établissement de la première liaison de communication entre le premier dispositif de réseau de communication et le deuxième dispositif de réseau de communication comprend :
la configuration et l'établissement de la première liaison de communication selon des informations de configuration de la première liaison de communication dans le paquet de fichiers de déploiement de station.

2. Procédé selon la revendication 1, dans lequel,
le paquet de fichiers de déploiement de station comprend en outre : des informations de configuration d'une deuxième liaison ; les informations de configuration de la deuxième liaison étant lues par le deuxième dispositif de réseau de communication lorsque le deuxième dispositif de réseau de communication exécute le déploiement de station et étant configurées pour que le deuxième dispositif de réseau de communication configure une liaison de communication entre le deuxième dispositif de réseau de communication et un deuxième OMC correspondant au deuxième dispositif de réseau de communication ; dans lequel le deuxième OMC est un OMC 5G.

3. Procédé selon la revendication 1 ou 2, dans lequel,
le premier dispositif de réseau de communication et le deuxième dispositif de réseau de communication sont dans la même trame d'unité de bande de base de construction, BBU.

4. Dispositif de déploiement de station de dispositif de communication, comprenant un processeur, une mémoire, et un programme exécutable stocké dans la mémoire et exécuté par le processeur, dans lequel, le processeur met en œuvre des étapes du procédé de déploiement de station de dispositif de communication selon l'une quelconque des revendications 1 à 3 lorsque le processeur exécute le programme exécutable.

5. Support de stockage, stockant un programme exécutable, dans lequel le programme exécutable, lorsqu'il est exécuté par un processeur, met en œuvre les étapes du procédé de déploiement de station de dispositif de communication selon l'une quelconque des revendications 1 à 3.
